(19) Europäisches Patentamt / European Patent Office / Office européen des brevets

(11) **EP 1 929 778 B1**

(12) **FASCICULE DE BREVET EUROPEEN**

(45) Date de publication et mention
de la délivrance du brevet:
**14.02.2018 Bulletin 2018/07**

(21) Numéro de dépôt: **06793686.4**

(22) Date de dépôt: **20.09.2006**

(51) Int Cl.:
*H04N 7/173* (2011.01)      *H04N 7/088* (2006.01)
*H04N 5/445* (2011.01)      *G06F 3/0485* (2013.01)
*H04N 21/431* (2011.01)    *H04N 21/482* (2011.01)
*H04N 21/485* (2011.01)

(86) Numéro de dépôt international:
**PCT/EP2006/066559**

(87) Numéro de publication internationale:
**WO 2007/036473 (05.04.2007 Gazette 2007/14)**

(54) **PROCEDE DE NAVIGATION DANS UNE LISTE PAR DEFILEMENT CONTINU D'UNE CARACTERISTIQUE GRAPHIQUE, ET TERMINAL ASSOCIE**

VERFAHREN ZUM DURCHSUCHEN EINER LISTE DURCH KONTINUIERLICHES ROLLEN EINES GRAPHISCHEN MERKMALS UND DIESBEZÜGLICHES ENDGERÄT

METHOD FOR BROWSING THROUGH A LIST BY CONTINUOUS SCROLLING OF A GRAPHIC FEATURE AND RELATED TERMINAL

(84) Etats contractants désignés:
**DE FR GB**

(30) Priorité: **27.09.2005 FR 0552891**

(43) Date de publication de la demande:
**11.06.2008 Bulletin 2008/24**

(73) Titulaire: **Thomson Licensing DTV
92130 Issy-les-Moulineaux (FR)**

(72) Inventeurs:
• **MARTIN, Jérôme
F-78111 Dammartin en Serve (FR)**
• **COULLON, Isabelle
F-92380 Garches (FR)**

(74) Mandataire: **de la Fouchardière, Marie-Noëlle et al
TECHNICOLOR
1-5, rue Jeanne d'Arc
92130 Issy-les-Moulineaux (FR)**

(56) Documents cités:
EP-A- 0 707 258          EP-A- 1 124 372
FR-A- 2 855 352          JP-A- 2003 108 487
US-A1- 2003 076 301    US-B1- 6 571 390

**Description**

L'invention concerne un procédé de navigation dans une liste d'éléments accessibles à l'aide d'un récepteur audiovisuel, et un terminal audiovisuel muni d'une interface utilisateur pour la navigation

Dans un système de télévision diffusé, le nombre de chaînes disponibles peut devenir très important. C'est le cas dans le domaine de la télévision numérique, des centaines de services sont actuellement présentés sous la forme d'une liste affichée sur un écran. L'utilisateur navigue au sein de cette liste pour sélectionner celui qui l'intéresse. L'utilisateur actionne les touches de direction pour pointer sur un service identifié par son nom, celui-ci est alors visuellement distingué des autres services. Cette distinction visuelle permet de mettre en évidence le service courant, on dit aussi le service possédant le « focus ». Cette distinction se traduit généralement par une différence de la couleur, du niveau de gris, ou du contraste par rapport aux autres services, ou par un clignotement, ou encore par un soulignement. La visualisation du contenu audiovisuel du service est alors commandée par l'appui sur une touche de validation (OK par exemple). Lorsque de très nombreux services sont accessibles, l'utilisateur doit donc lancer de nombreuses commandes de navigation pour finalement mettre le focus sur le service souhaité et le sélectionner.

Pour limiter le nombre de commandes introduites, il existe plusieurs solutions. Une solution consiste à segmenter la liste initiale en page comprenant un nombre déterminé d'éléments. En plus des touches de direction avant et arrière (ou gauche et droite), l'utilisateur dispose de commandes de saut de page en avant et en arrière et peut ainsi faire avancer ou reculer le focus au sein de la liste en sautant un groupe d'éléments. Une autre solution consiste à effectuer un défilement continu et régulier en maintenant enfoncée une touche de navigation. Le focus passe d'un élément de la liste à un autre tant que la touche est enfoncée. Pour sélectionner un élément, il suffit d'attendre le positionnement du focus sur cet élément, et de cesser de presser la touche à ce moment. Un perfectionnement de la précédente solution consiste à faire varier la vitesse de défilement en fonction de la durée d'appui de la touche. Plus la touche reste enfoncée longtemps, plus la vitesse de défilement devient rapide. Avec un peu de pratique, l'utilisateur peut avancer rapidement vers la partie de la liste ou se trouve l'élément à sélectionner, puis relâcher la touche, continuer ensuite à petite vitesse un court moment. Par des appuis courts, l'utilisateur se rapproche de l'élément à petite vitesse et peut le sélectionner.

Mais cette façon de faire n'est pas pratique lorsque la liste contient peu d'éléments, en effet en maintenant le bouton enfoncé, le focus se retrouve assez rapidement à un bout de la liste obligeant l'utilisateur à repartir en arrière. Le brevet US6,337,694 décrit une méthode de navigation au sein d'une liste d'éléments. L'écran affiche une page d'éléments et l'utilisateur navigue dans cette page. Lorsque l'utilisateur appuie sur les boutons de navigation, la vitesse de défilement est calculée en fonction du nombre d'éléments affichés. L'enseignement de ce document permet d'adapter la navigation au nombre d'éléments affichés, et donc ne suggère en rien d'adapter la vitesse en fonction de la liste complète d'éléments. Par exemple, si le nombre d'éléments affichés est important, la vitesse de navigation est importante. Cette vitesse importante ne se justifie pas si le nombre d'éléments affichés est à peine plus petit que celui de la liste complète.

Le brevet STUK US 2003/0076301 décrit un lecteur MP3 comportant une interface de navigation pour la sélection d'éléments au sein d'une liste d'éléments affichés sur un écran. L'utilisateur fait tourner la roue ce qui provoque le défilement d'un curseur sur la liste d'éléments. L'accélération appliquée au défilement est fonction de l'accélération appliquée à la roue et du nombre d'éléments de la liste. De cette manière, l'utilisateur peut rapidement atteindre une zone où se trouve un élément à chercher, puis à l'aide de rotation de faible amplitude, il peut positionner un curseur sur un élément donné . Cette interface de navigation est utilisable lorsque l'on dispose d'un moyen d'introduction d'un déplacement mais pas pour de simple moyen d'introduction de commande, une touche par exemple. De plus, cette interface nécessite un apprentissage préalable pour son utilisation optimale.

La présente invention permet de naviguer au sein d'une liste d'éléments avec une vitesse adaptée permettant à l'utilisateur d'atteindre rapidement l'élément à sélectionner au sein d'une liste.

La présente invention a pour objet un procédé de navigation sur des éléments, les éléments étant extraits d'une liste d'un nombre déterminé d'éléments, comportant une étape d'affichage d'une partie au moins des éléments de la liste ; une étape de défilement continu d'une caractéristique graphique sur les éléments affichés, ladite étape de défilement continu étant déclenchée par l'introduction d'une commande de navigation, caractérisé en ce que la vitesse de défilement de la caractéristique graphique évolue entre une vitesse minimale et une vitesse maximale, ladite vitesse maximale étant déterminée en fonction du nombre total d'éléments de la liste.

De cette manière, l'utilisateur dispose d'une commande très simple, comme une touche de clavier par exemple, qui contrôle le défilement de la caractéristique graphique d'un élément à l'autre, la vitesse de défilement maximale dépend du nombre total d'éléments de la liste. Ainsi, l'utilisateur n'a pas besoin de connaître ce nombre afin d'ajuster de façon optimale cette vitesse, le procédé s'en charge pour lui.

Selon un premier perfectionnement, tant que la commande de navigation est activée, la vitesse de défilement de la caractéristique graphique évolue jusqu'à atteindre la vitesse de défilement maximale fonction du nombre total d'éléments de la liste. De cette manière, l'utilisateur peut rapidement atteindre une zone déterminée de la liste, et dans cette zone évoluer à une vitesse différente. Selon un autre perfectionnement, la vitesse de défilement de la caractéristique graphique évolue de façon linéaire dès que la commande de navigation est activée. De cette manière, l'utilisateur peut régler sa vitesse comme il le souhaite. Selon une variante, la vitesse de défilement n'évolue pas de façon linéaire tant que la commande de navigation est activée. Ainsi, la vitesse atteint sa valeur maximale à la fin permettant d'avoir un début une meilleure précision dans la navigation.

Selon un autre perfectionnement, le procédé comporte une étape d'affichage d'une indication visuelle représentant la valeur de la vitesse de défilement. De cette manière, à chaque instant, l'utilisateur a une perception directe de la valeur de la vitesse. Selon un perfectionnement, la valeur de la vitesse de défilement est indiquée par une barre d'éléments. Le nombre d'éléments marqués indique la vitesse de défilement. Tous les éléments sont marqués lorsque la vitesse de défilement atteint la vitesse maximale.

Selon un autre perfectionnement, l'utilisateur dispose de commandes permettant d'augmenter la vitesse de défilement, et de la diminuer. Ainsi l'utilisateur a un excellent contrôle de la vitesse de défilement. Selon une variante, l'utilisateur dispose d'une commande permettant d'augmenter progressivement la vitesse de défilement, et une commande permettant d'arrêter le défilement. De cette manière, l'utilisateur peut arrêter le défilement du focus sur l'élément souhaité afin de l'activer par exemple. Selon un perfectionnement, les deux commandes permettant d'augmenter la vitesse et de la stopper sont issus du même moyen d'introduction, la durée de l'appui sur ce moyen différencie le type d'action. De cette manière, la télécommande peut disposer d'un nombre très restreint de touches pour faire fonctionner la navigation.

La présente invention a aussi pour objet un appareil de visualisation comportant un moyen d'introduction de commandes de navigation, un moyen d'affichage d'une partie au moins des éléments d'une liste ayant un nombre déterminé d'éléments, un moyen de génération d'un défilement continu d'une caractéristique graphique sur les éléments affichés, le moyen de génération du défilement étant contrôlé par le moyen d'introduction de commandes, caractérisé en ce que le moyen de génération fait défiler la caractéristique graphique à une vitesse qui évolue entre une vitesse minimale et une vitesse maximale, ladite vitesse maximale étant fonction du nombre total d'éléments de la liste.

D'autres caractéristiques et avantages de l'invention apparaîtront à travers la description d'un exemple de réalisation non limitatif de l'invention, explicité à l'aide des figures jointes, parmi lesquelles :

- la figure 1 est un diagramme bloc d'un système de réception de télévision numérique selon le présent exemple de réalisation ;
- la figure 2 est un exemple de représentation de trois apparences d'écran montrant l'affichage d'une partie de liste suite à des commandes de navigation ;
- la figure 3 représente un graphique montrant l'évolution de la vitesse de défilement en fonction du temps où la touche contrôlant la navigation est maintenue enfoncée ;
- les figures 4a et 4b représente deux graphiques illustrant l'évolution de la vitesse de défilement en fonction du temps de maintien enfoncé de la touche selon un perfectionnement de l'invention ;
- la figure 5 représente un graphique illustrant l'évolution de la vitesse de défilement selon un autre perfectionnement de l'invention ;

Selon le présent exemple de réalisation, le terminal de navigation peut être un téléviseur interactif, il peut aussi être un récepteur prévu pour la réception de données vidéo numériques, ou autorisant la connexion à un réseau de communication bidirectionnelle, Internet par exemple. Les éléments affichés sont par exemple des listes de services diffusant des programmes audiovisuels.

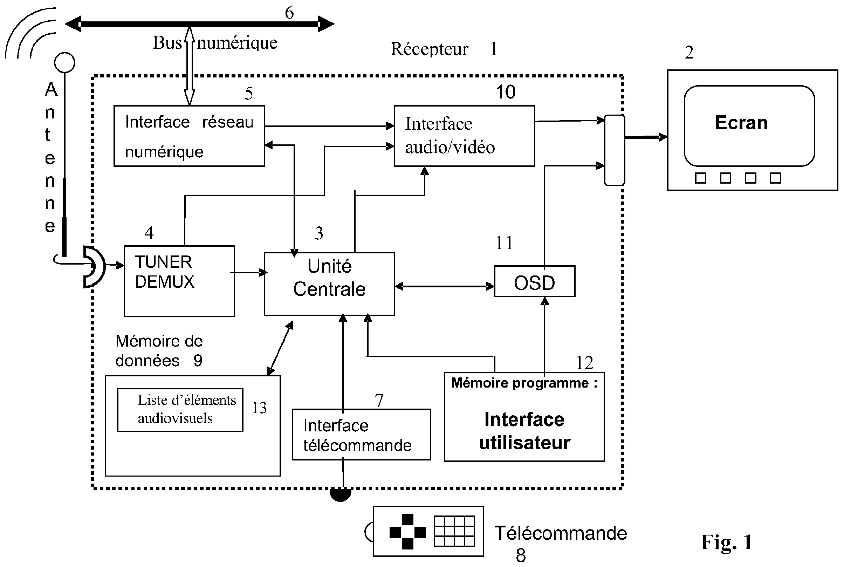

La figure 1 est un diagramme bloc d'un terminal audiovisuel. Le terminal 1 est relié à un écran de visualisation 2, une antenne, elle-même reliée à un moyen de réception 4 qui comprend un tuner qui fournit un signal à un démodulateur, les données reçues sont corrigées par un circuit correcteur et transmises à un démultiplexeur. Le démultiplexeur comporte un certain nombre de filtres programmés par une unité centrale 3 en fonction des diverses applications supportées par le récepteur 1. Les filtres correspondent à une information d'identification présente dans l'en-tête des paquets du signal démodulé.

Les sections ou paquets audio ou vidéo filtrés par le démultiplexeur sont stockés dans des zones prédéfinies d'une mémoire de données 9 à l'attention de ces applications. Si nécessaire, les informations sont tout d'abord déchiffrées par un circuit déchiffreur en fonction des droits de l'utilisateur, avant d'être stockées dans la mémoire de données 9. Le récepteur comporte également une logique de décodage audio/vidéo 10 pour la génération des signaux audiovisuels envoyés à l'écran de télévision 2, et éventuellement une interface 5 pour la communication avec un bus numérique local à haut débit 6 permettant de recevoir des données audio/vidéo d'un réseau bidirectionnel avec un stockage dans la mémoire 9. Ce réseau est par exemple un réseau IEEE 1394. Une mémoire de programmes exécutables 12 contient le logiciel d'exploitation du récepteur et des applications spécifiques. Selon le présent exemple, la mémoire 12 contient au moins cinq applications : un décodeur audio, un décodeur vidéo, un décodeur Teletext, un ensemble de contrôle d'accès, ainsi qu'un module interface utilisateur appelé « Navigateur ». Pour la clarté du schéma, la mémoire 12 est représentée sous la forme d'un seul bloc, mais comporte à la fois de la mémoire vive, de la mémoire morte et de la mémoire persistante reprogrammable (par exemple de type 'Flash').

Le récepteur comporte également une interface infrarouge 7 d'une télécommande 8, ladite interface étant également reliée au microprocesseur 3. La télécommande est dotée des touches de navigation ↑, ↓, → et ← et « OK » et « Menu »dont nous verrons plus tard la fonction.

Un générateur de caractères 11, appelé souvent circuit OSD, de l'Anglais "On Screen Display" (signifiant littéralement "affichage sur l'écran") permet la génération de menus de commande ou de graphiques relatifs aux paramètres du récepteur ou à une application particulière. Le signal vidéo généré par ce générateur de caractères est multiplexé avec l'un des signaux vidéo en provenance des moyens de réception 4 ou de l'interface 5 avec le réseau numérique vers une première prise Péritel (prise SCART en anglais) reliée à l'écran de visualisation 2.

L'exemple de réalisation se place dans le cadre d'un système de diffusion de télévision numérique, par exemple de type DVB (pour 'Digital Video Broadcast'). L'invention ne se limite pas à ce cadre, et peut être employée dans d'autres environnements où des listes ordonnées d'éléments sont présentées à un utilisateur. L'interface utilisateur comporte une application de guide de programmes électroniques. Ce guide permet à l'utilisateur d'accéder à des informations descriptives concernant les services ainsi que les événements présents et futurs diffusés par ces services. Ces informations sont dérivées de données également diffusées sur le réseau. Selon le présent exemple, ces données sont des données de service du DVB, décrites plus en détail dans le document "EN 300 468 Digital Video Broadcasting; Specification for Service Information (SI) in DVB systems". Ce document est publié par l'ETSI ("European Telecommunications Standards Institute"). Ces données sont transportées dans le flux multiplexé reçu par le récepteur dans des paquets possédant des identificateurs repérés de façon connue par le démultiplexeur du circuit de réception 4 sous contrôle du microprocesseur 3 et récupérées par ce dernier dans une partie de la mémoire de données 9, pour utilisation par l'application interface utilisateur. Les données relatives au guide électronique de programmes sont organisées en 'tables' décrivant de façon hiérarchisée les objets du flux. Une description des services disponibles peut être obtenue de façon connue notamment à partir d'une table libellée 'SDT'. La hiérarchie des tables ainsi que les identificateurs des paquets correspondants sont décrits dans le document DVB qui vient d'être cité. Pour l'extraction des paquets contenant les diverses tables, les filtres du démultiplexeur sont programmés de façon appropriée.

Dans un premier temps, les paquets contenant les services sont regroupés afin d'élaborer une liste des services disponibles au niveau du récepteur. Cette liste est mémorisée dans une partie 13 de la mémoire de données 9. Comme cette liste contient de nombreux éléments, il n'est pas possible de les afficher tous. Le récepteur affiche alors des sous-listes qui sont des parties de la liste globale, le nombre d'éléments d'une sous liste étant déterminé par le récepteur, cette sous-liste peut contenir qu'un seul élément. En fond d'écran, le récepteur envoie le contenu vidéo du service courant que l'utilisateur peut sélectionner avec les touches « programme + » et « programme - ». Le numéro et/ou l'identifiant textuel du service courant est affiché dans une petite fenêtre de l'écran, indépendamment des sous-listes affichées. L'utilisation de touches dédiées pour la sélection de programmes ne limite en rien l'invention à ce type de touches, l'utilisation de touches de direction « Haut » et « Bas » pour naviguer sur une liste affichée est tout à fait envisageable.

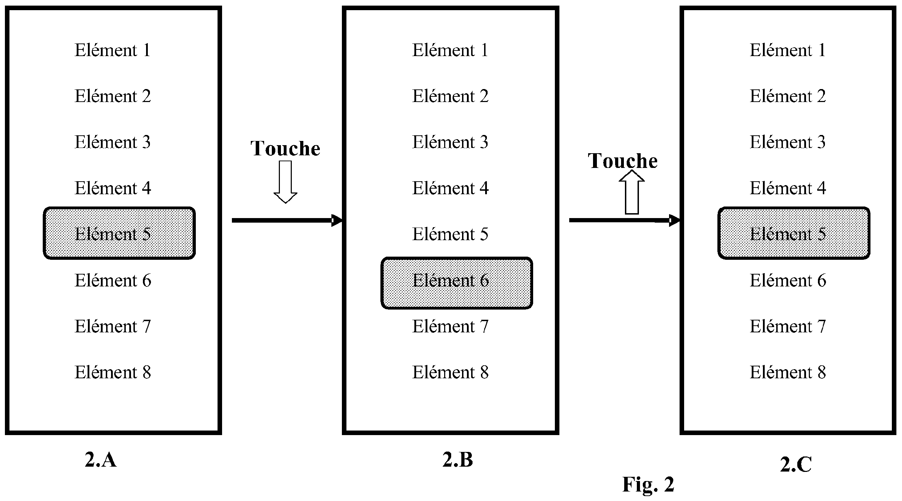

Supposons que l'utilisateur lance le navigateur pour l'affichage d'une liste de programmes à sélectionner. La figure 2 montre trois exemples d'apparences d'écran montrant l'interface utilisateur généré par le navigateur consécutivement à l'introduction de commandes de navigation. La partie gauche notée 2.A représente l'apparence initiale de la navigation. L'écran présente une sous-liste de 8 éléments notés du haut vers le bas : « élément 1 » à « élément 8 ». Sur la figure, l'élément 5 est l'élément courant, de ce fait il possède le focus. La partie centrale notée B représente l'apparence d'écran à la suite de l'appui sur la touche ↓. De façon connue en soi, le focus se déplace sur l'élément situé en dessous : l'élément 6, cet élément est entouré de deux éléments visibles à l'écran (apparence 2.B). Inversement, si l'utilisateur appuie sur la touche ↑ alors le focus revient à l'élément précédent : l'élément 5 (apparence 2.C). De cette manière, l'utilisateur peut positionner le focus sur l'élément qu'il souhaite et l'activer, par exemple en appuyant sur la touche OK de la télécommande. Si la liste affiche des services, l'activation entraîne la visualisation du programme diffusé par ce service.

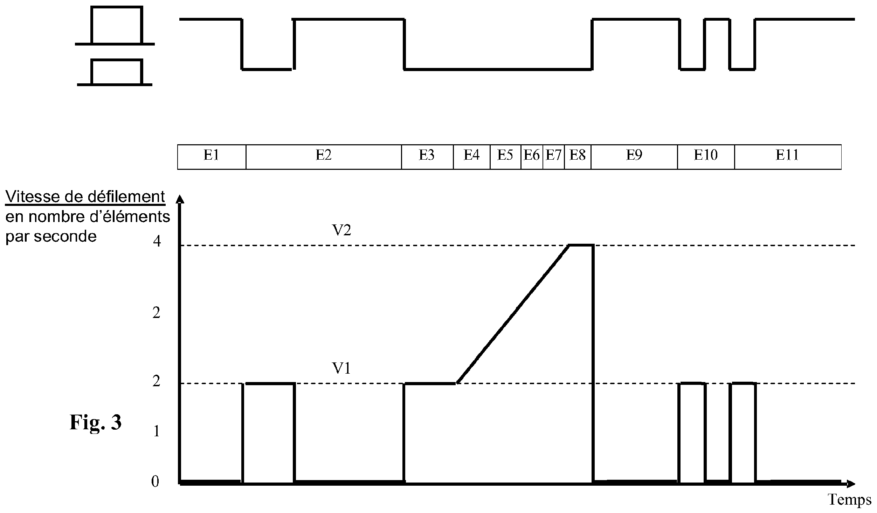

La figure 3 montre un graphique représentant l'évolution de la vitesse en fonction de défilement et des commandes introduites par l'utilisateur. La courbe en haut de la figure représente l'état enfoncé ou relâché de la touche de navigation. La barre en dessous contient le numéro de l'élément ayant le focus au fur et à mesure que le temps s'écoule. En partie inférieure, la courbe montre l'évolution de la valeur de vitesse de défilement en fonction du temps. La vitesse de défilement s'exprime en nombre d'éléments ayant reçu le focus par unité de temps, en l'occurrence la seconde.

Dans un premier temps, l'utilisateur lance une commande d'affichage d'une liste d'éléments. Cette liste comporte un nombre fini d'éléments, le programme d'affichage utilise cette liste pour déterminer la vitesse maximale de défilement V2. Selon un mode de réalisation simple, ce nombre est le résultat d'une fonction affine de type

$$V2 = ( A \times N ) + B.$$

Avec les valeurs de A = 1 / 100 et B = 2, l'équation devient V2 = N / 100 + 1. Si la liste contient 10 éléments, la vitesse maximale V2 est égale à 2.1 élément par seconde, ce qui signifie qu'un élément possède le focus pendant 0.47 secondes. Si la liste contient 100 éléments, la vitesse maximale V2 est égale à 3 éléments par seconde, chaque élément possédant le focus pendant un tiers de seconde. Enfin, si la liste contient 400 éléments, 6 éléments par seconde auront successivement le focus et la vitesse de défilement sera très rapide. De ce fait, cette longue liste sera balayée rapidement. D'autres types d'équations que celle décrite ci-dessus peuvent être utilisées, par exemple une équation logarithmique :

$$V2 = \text{Log} \, ( \, A \times N \, ) + B.$$

Une variante consiste à définir des plages de nombres d'éléments et à leur associer une vitesse de défilement fixe. Voici un exemple de tableau pour obtenir la vitesse de défilement en fonction du nombre total d'éléments de la liste.

TABLEAU 1

| Nombre total d'éléments de la liste | Vitesse maximale de défilement, en élément par seconde - V2 |
|---|---|
| Entre 1 et 10 | 2 él./seconde |
| Entre 11 et 30 | 2,25 él./seconde |
| Entre 31 et 70 | 2,66 él./seconde |
| Entre 71 et 150 | 3,5 él./seconde |
| Entre 151 et 500 | 4.33 él./seconde |
| Plus de 500 | 6 él./seconde |

La navigation s'effectue de la façon suivante : lorsque l'utilisateur appuie sur la touche un court moment, typiquement une seconde maximum, il n'y a pas de défilement mais passage d'un élément à l'autre dans la direction du déplacement indiqué par la touche. Si l'appui est prolongé, alors le navigateur se positionne dans un mode de défilement continu. Le passage du mode élément par élément à chaque appui au mode défilement continu s'effectue automatiquement dès que la touche est maintenue enfoncée plus d'une seconde.

Selon un mode très simple de réalisation, le mode de défilement continu n'a qu'une vitesse de défilement : V2 calculée à l'aide du tableau ci-dessus. Ainsi, la vitesse de défilement atteint immédiatement la vitesse maximale dès que la touche est enfoncée. Une variante illustrée par la figure 3 consiste en ce que, dans un premier temps la vitesse de défilement est minimale, cette vitesse représentée par le symbole V1 sur la figure 3 est typiquement égale à 2 éléments par seconde. Puis, lorsque l'utilisateur appuie longuement sur la touche, la vitesse augmente progressivement pour atteindre la vitesse de défilement maximale V2, fonction du nombre d'éléments de la liste.

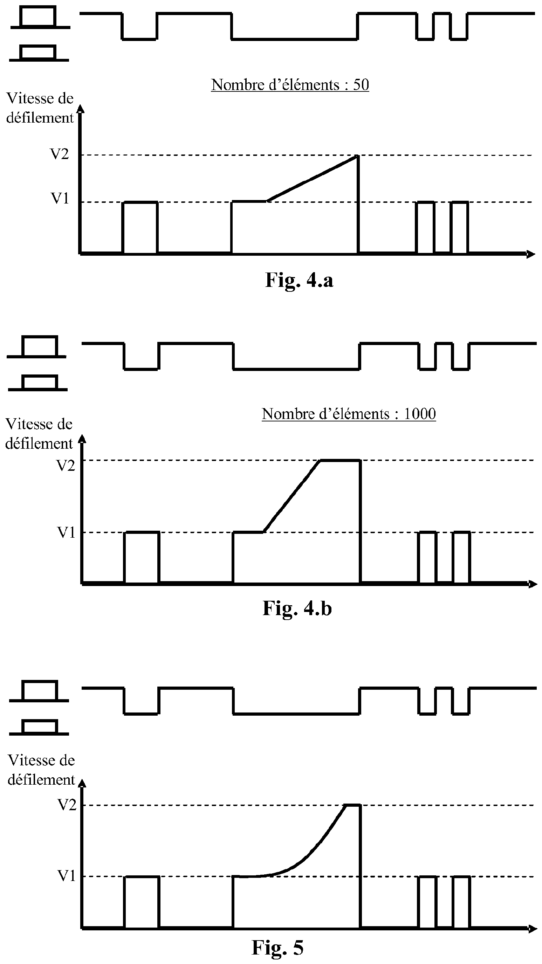

Dans ce qui précède, la variation de la vitesse par unité de temps pour passer de V1 à V2 est constante quel que soit le nombre total d'éléments de la liste. Typiquement, cette variation de la vitesse, que l'on peut appeler « accélération » se situe à 0.3 éléments par seconde jusqu'à atteindre la vitesse maximale V2 fonction du nombre d'éléments. De ce fait, à chaque seconde écoulée, la vitesse augmente de 0.3 éléments par seconde. Nous allons maintenant décrire un perfectionnement où l'évolution de la vitesse de défilement dépend également du nombre total d'éléments de la liste. Les figures 4a et 4b illustrent ce perfectionnement. Le navigateur détermine l'accélération de la vitesse de défilement par une fonction affine de type

$$Acc = ( \, C \times N \, ) + D.$$

Par exemple, C = 1/200 et D = 0.1, selon cet exemple, si la liste contient 100 éléments, la valeur de vitesse augmente de 0.6 él/sec., jusqu'à atteindre la vitesse maximale de défilement V2.

Une façon simple pour calculer l'accélération appliquée à la vitesse consiste à définir des fourchettes de nombres d'éléments et à leur associer une vitesse de défilement fixe et une valeur d'accélération. Il suffit alors de rajouter une colonne au tableau 1. Voici un exemple de tableau permettant de fournir la vitesse de défilement et l'accélération en fonction du nombre d'éléments, définissant ainsi l'évolution de la vitesse en fonction du temps.

TABLEAU 2

| Nombre total d'éléments de la liste | Vitesse maximale de défilement, en élément par seconde - V2 | Accélération |
|---|---|---|
| Entre 1 et 10 | 2 él./seconde | 0.1 par seconde |
| Entre 11 et 30 | 2,25 él./seconde | 0.3/sec. |
| Entre 31 et 70 | 2,66 él./seconde | 0.5/sec. |
| Entre 71 et 150 | 3,5 él./seconde | 0.8 /sec. |
| Entre 151 et 500 | 4.33 él./seconde | 1. 1 /sec. |
| Plus de 500 | 6 él./seconde | 1.5 /sec. |

Supposons que la liste contienne 50 éléments, les paramètres sont V2 = 2.66 él. /sec et l'accélération est égale à 0.5 toutes les secondes jusqu'à ce que la vitesse maximale soit atteinte. Après une seconde d'appui, le navigateur établit le mode défilement continu avec une vitesse minimale V1 de 2 éléments par seconde. Une seconde après, la vitesse s'accroît de 0.5 et atteint 2.5 éléments par seconde. A trois secondes, la vitesse calculée est de : 2.5 + 0.5 = 3 él./sec ; dépassant la vitesse maximale, le navigateur maintient alors le défilement à 2.66 él./sec.. Ce perfectionnement est particulièrement avantageux car, si la liste contient un grand nombre d'éléments, non seulement la vitesse maximale de défilement sera plus élevée mais le temps pour atteindre cette vitesse maximale est plus court. De cette façon, l'utilisateur balaie plus rapidement une grande liste.

Un autre perfectionnement consiste en ce que l'évolution de la vitesse de défilement n'est pas linéaire et obéit à une fonction mathématique plus complexe qu'une fonction linéaire, en d'autres termes, l'accélération de la vitesse n'est pas constante. Par exemple, l'évolution de la vitesse suit une courbe parabolique, la relation liant le temps d'appui $t_i$ et la vitesse $V_i$ respecte une fonction de type $V_i = A \times t_i^2 + B \times t_i + C$. De cette manière l'utilisateur peut ajuster au départ sa vitesse et lorsqu'il maintient longtemps la touche enfoncé, il atteint plus rapidement la vitesse maximale V2.

Un autre perfectionnement consiste à afficher une représentation graphique de la valeur de la vitesse de défilement à un instant donné. Selon un exemple préféré de réalisation, cette représentation graphique est une couleur. Reprenons le menu de la figure 2, au départ la liste affichée est blanche et le curseur est fixe. Lorsque l'utilisateur appuie sur le bouton, la liste affichée devient rose et reste de cette couleur lorsque la vitesse est minimale. Au fur et à mesure que la vitesse augmente, la couleur se renforce et devient rouge, sans toutefois gêner la lisibilité des textes de la liste. De cette manière, l'utilisateur reçoit un retour plus visuel de sa commande d'affichage. Une variante de ce perfectionnement consiste à afficher une barre d'éléments (« bargraph » en anglais), comprenant par exemple 10 éléments qui sont soit éteints, soit allumés. Lorsque la navigation s'effectue à la vitesse minimale V1 alors un seul élément est allumé et les neuf autres sont éteints. Plus la vitesse augmente, plus le nombre d'éléments allumés augmente. De cette manière, lorsque tous les éléments sont allumés, l'utilisateur sait que la vitesse maximum V2 est atteinte.

Dans les paragraphes précédents et les figures 3, 4 et 5, des vitesses croissantes ont été montrées. La présente invention recouvre la variante consistant en ce que la vitesse en mode défilement continu est d'abord maximale : V2, toujours fonction du nombre total d'élément de la liste, puis en fonction des touches enfoncées de diminuer la vitesse pour atteindre une valeur prédéterminée V1. Ceci permet si la liste est grande, d'avoir immédiatement une vitesse maximale, puis si on veut diminuer la vitesse on appuie sur la touche de navigation opposée, ce qui réduit la vitesse par cran jusqu'à l'arrêt complet du défilement. L'utilisateur contrôle ainsi parfaitement la vitesse en utilisant une touche pour l'augmenter jusqu'à une valeur maximale, et une touche pour la diminuer jusqu'à l'arrêt du défilement du focus sur l'élément désiré.

Dans les paragraphes précédents, le défilement s'arrête lorsque l'utilisateur relâche la touche. Une variante consiste en ce que la vitesse se maintienne constante lorsque l'utilisateur relâche la touche. De cette manière, l'utilisateur peut parfaitement régler la vitesse. Lorsque l'utilisateur veut ralentir le défilement, il appuie sur la touche de navigation opposée. Par exemple, il appuie sur la touche → pour lancer et accélérer le défilement, et sur la touche ← pour ralentir, puis s'arrêter et si l'appui se prolonge, le défilement repart en sens inverse. Une autre façon de faire consiste à utiliser une touche marquée « STOP » pour arrêter brusquement le défilement. De cette façon, l'utilisateur dispose de deux touches pour contrôler l'avance dans la liste, une première pour avancer plus ou moins vite selon que la touche a été enfoncée plus ou moins longtemps, et une autre pour s'arrêter. Une autre façon de faire consiste à remplacer l'action sur une touche « STOP » par un appui court sur la touche, ce qui arrête le défilement. Puis l'utilisateur peut reprendre le contrôle de la vitesse en appuyant plus ou moins longtemps. Cette façon de faire à l'avantage de n'utiliser qu'une seule touche pour contrôler le défilement.

La présentation de listes et sous-listes de services diffusés dans le cadre de la télévision numérique ne doit être considérée que comme un exemple d'utilisation de la présente invention. La présente invention s'applique toutes listes d'éléments affichables sur un écran ou tout autre moyen de visualisation, notamment, les listes de programmes audiovisuels, des listes de sources permettant de se procurer des documents, des listes de fonctions accessibles à partir d'un terminal, etc.

L'invention s'applique également à tous types de défilements, et notamment à un défilement en carrousel où l'élément mis en évidence reste au centre de l'écran, dans un cadre par exemple, et dans ce cas ce sont les éléments de la liste qui défilent et viennent successivement se placer au centre de l'écran. Dans ce cas, une seule touche peut suffire. Le carrousel se déroule dans un seul sens et le premier élément de la liste succède au dernier. L'invention s'applique également lorsque l'élément mis en évidence est affiché au sein d'une grille d'éléments. Dans ce cas, les commandes de navigation concerne les quatre directions Haut, Bas, Gauche, Droite. Une combinaison de touches est également envisageable, par exemple les touches ↑ et ←, ce qui permet un déplacement en oblique à une vitesse contrôlée.

## Revendications

1. Procédé de navigation sur des éléments, les éléments étant extraits d'une liste d'un nombre déterminé d'éléments, comportant une étape d'affichage d'une partie au moins des éléments de la liste, une étape de défilement continu d'une caractéristique graphique sur les éléments affichés, ladite étape de défilement continu étant déclenchée par l'introduction d'une commande de navigation, **caractérisé en ce que** la vitesse de défilement de la caractéristique graphique évolue entre une vitesse minimale et une vitesse maximale, ladite vitesse maximale étant déterminée en fonction du nombre total d'éléments de la liste.

2. Procédé de navigation sur des éléments affichés selon la revendication 1 **caractérisé en ce que** tant que la commande de navigation est activée, la vitesse de défilement de la caractéristique graphique évolue d'une façon linéaire d'une valeur prédéterminée jusqu'à atteindre la vitesse de défilement maximale fonction du nombre total d'éléments de la liste.

3. Procédé de navigation sur des éléments affichés selon la revendication 1 **caractérisé en ce que** tant que la commande de navigation est activée, la vitesse de défilement de la caractéristique graphique évolue d'une façon non linéaire d'une valeur prédéterminée jusqu'à atteindre la vitesse de défilement maximale fonction du nombre total d'éléments de la liste.

4. Procédé de navigation sur des éléments affichés selon l'une quelconque des revendications 1 à 3 **caractérisé en ce qu'**il comporte une étape d'affichage d'une indication visuelle représentant la valeur de la vitesse de défilement.

5. Procédé de navigation sur des éléments affichés selon la revendication 4 **caractérisé en ce que** la valeur de la vitesse de défilement est indiquée par une barre d'éléments, le nombre d'éléments marqués donnant une indication de la vitesse de défilement, tous les éléments étant marqués lorsque la vitesse de défilement est maximale.

6. Procédé de navigation sur des éléments affichés selon la revendication 1 **caractérisé en ce que** la vitesse de défilement de la caractéristique graphique atteint immédiatement la vitesse maximale fonction du nombre total d'éléments de la liste dès que la commande de navigation est activée.

7. Procédé de navigation sur des éléments affichés selon l'une quelconque des revendications précédentes **caractérisé en ce qu'**il comporte une étape d'augmentation de la vitesse de défilement jusqu'à la vitesse maximale, et une étape de diminution de la vitesse, chacune de ses étapes étant activée par l'introduction d'une commande.

8. Procédé de navigation sur des éléments affichés selon la revendication 7 **caractérisé en ce que** chacune des deux étapes de contrôle de la vitesse est activée par l'introduction d'une commande sur un moyen d'introduction, la durée de l'appui sur le dit moyen différenciant l'activation de l'une ou de l'autre étapes.

9. Procédé de navigation sur des éléments affichés selon l'une quelconque des revendications précédentes **caractérisé en ce qu'**il comporte une première étape d'introduction d'une première commande déclenchant l'étape de défilement continu à la vitesse maximale fonction du nombre total d'éléments de la liste, et une seconde étape d'introduction d'une seconde commande déclenchant une étape de diminution de la vitesse de défilement continu.

10. Appareil de visualisation (1) comportant un moyen d'introduction de commandes de navigation (7, 8), un moyen d'affichage (3, 10, 11) d'une partie au moins des éléments d'une liste ayant un nombre déterminé d'éléments, un moyen de génération (3, 12) d'un défilement continu d'une caractéristique graphique sur les éléments affichés, le moyen de génération (3,12) du défilement étant contrôlé par le moyen d'introduction de commandes, **caractérisé en ce que** le moyen de génération (3,12) fait défiler la caractéristique graphique à une vitesse qui évolue entre une vitesse minimale et une vitesse maximale, ladite vitesse maximale étant fonction du nombre total d'éléments de la liste.

11. Appareil de visualisation (1) selon la revendication 10 **caractérisé en ce que** le moyen de génération (3,12) fait défiler la caractéristique graphique d'une vitesse prédéterminée jusqu'à la vitesse maximale fonction du nombre total d'éléments de la liste, la variation de vitesse étant linéaire.

12. Appareil de visualisation (1) selon la revendication 10 **caractérisé en ce que** le moyen de génération (3,12) fait défiler la caractéristique graphique d'une vitesse prédéterminée jusqu'à la vitesse maximale fonction du nombre total d'éléments de la liste, la variation de vitesse étant non linéaire.

13. Appareil de visualisation (1) selon la revendication 10 **caractérisé en ce que** le moyen de génération (3,12) fait défiler la caractéristique graphique à la vitesse maximale fonction du nombre total d'éléments de la liste, dès que le moyen d'introduction de commandes de navigation (7, 8) est activé.

14. Appareil de visualisation (1) selon l'une quelconque des revendications 10 à 13 **caractérisé en ce qu'**il comporte un moyen d'affichage (3, 10, 11) d'une indication visuelle représentant la valeur de la vitesse de défilement.

15. Appareil de visualisation (1) selon l'une quelconque des revendications 10 à 14 **caractérisé en ce qu'**il comporte un moyen d'introduction de commandes de navigation (7, 8) pour augmenter la vitesse de défilement jusqu'à la vitesse maximale, et un moyen d'introduction de commandes de navigation (7, 8) pour diminuer la vitesse de défilement.

**Patentansprüche**

1. Verfahren zum Durchsuchen von Elementen, wobei die Elemente aus einer Liste einer bestimmten Anzahl von Elementen entnommen werden, umfassend einen Schritt des Anzeigens von mindestens einem Teil der Elemente der Liste, einen Schritt des kontinuierlichen Rollens eines graphischen Merkmals in den angezeigten Elementen, wobei der besagte Schritt des kontinuierlichen Rollens durch die Eingabe eines Befehls zum Durchsuchen ausgelöst wird, **dadurch gekennzeichnet, dass** sich die Rollgeschwindigkeit des graphischen Merkmals zwischen einer minimalen Geschwindigkeit und einer maximalen Geschwindigkeit entwickelt, wobei die besagte maximale Geschwindigkeit in Abhängigkeit von der Gesamtanzahl von Elementen der Liste bestimmt wird.

2. Verfahren zum Durchsuchen von angezeigten Elementen nach Anspruch 1, **dadurch gekennzeichnet, dass** sobald der Befehl zum Durchsuchen aktiviert wird, die Rollgeschwindigkeit des graphischen Merkmals sich linear von einem vorgegebenen Wert entwickelt, bis die maximale Rollgeschwindigkeit in Abhängigkeit von der Gesamtanzahl von Elementen der Liste erreicht ist.

3. Verfahren zum Durchsuchen von angezeigten Elementen nach Anspruch 1, **dadurch gekennzeichnet, dass** sobald der Befehl zum Durchsuchen aktiviert wird, die Rollgeschwindigkeit des graphischen Merkmals sich nicht linear von einem vorgegebenen Wert entwickelt, bis die maximale Rollgeschwindigkeit in Abhängigkeit von der Gesamtanzahl von Elementen der Liste erreicht ist.

4. Verfahren zum Durchsuchen von angezeigten Elementen nach einem der Ansprüche 1 bis 3, **dadurch gekennzeichnet, dass** es einen Schritt des Anzeigens eines visuellen Hinweises, der den Wert der Rollgeschwindigkeit darstellt, umfasst.

5. Verfahren zum Durchsuchen von angezeigten Elementen nach Anspruch 4, **dadurch gekennzeichnet, dass** der Wert der Rollgeschwindigkeit durch eine Leiste von Elementen angegeben wird, wobei die Anzahl markierter Elemente einen Hinweis zur Rollgeschwindigkeit gibt, wobei alle Elemente markiert sind, wenn die Rollgeschwindigkeit maximal ist.

6. Verfahren zum Durchsuchen von angezeigten Elementen nach Anspruch 1, **dadurch gekennzeichnet, dass** die Rollgeschwindigkeit des graphischen Merkmals sofort die maximale Geschwindigkeit in Abhängigkeit von der Gesamtanzahl von Elementen der Liste erreicht, sobald der Befehl zum Durchsuchen aktiviert wird.

**7.** Verfahren zum Durchsuchen von anzeigten Elementen nach einem der vorstehenden Ansprüche, **dadurch gekennzeichnet, dass** es einen Schritt der Erhöhung der Rollgeschwindigkeit bis zur maximalen Geschwindigkeit und einen Schritt der Verringerung der Geschwindigkeit umfasst, wobei jeder seiner Schritte durch die Eingabe eines Befehls aktiviert wird.

**8.** Verfahren zum Durchsuchen von angezeigten Elementen nach Anspruch 7, **dadurch gekennzeichnet, dass** jeder der zwei Schritte zur Steuerung der Geschwindigkeit durch die Eingabe eines Befehls auf einem Eingabemittel aktiviert wird, wobei die Dauer des Drückens auf dem besagten Mittel zwischen der Aktivierung des einen oder des anderen Schrittes unterscheidet.

**9.** Verfahren zum Durchsuchen von angezeigten Elementen nach einem der vorstehenden Ansprüche, **dadurch gekennzeichnet, dass** es einen ersten Schritt der Eingabe eines ersten Befehls, der den Schritt des kontinuierlichen Rollens bei maximaler Geschwindigkeit in Abhängigkeit von der Gesamtanzahl von Elementen der Liste auslöst, und einen zweiten Schritt der Eingabe eines zweiten Befehls, der einen Schritt der Verringerung der Geschwindigkeit des kontinuierlichen Rollens auslöst, umfasst.

**10.** Gerät zur Visualisierung (1), umfassend ein Mittel zur Eingabe von Befehlen zum Durchsuchen (7, 8), ein Mittel zum Anzeigen (3, 10, 11) von mindestens einem Teil der Elemente einer Liste, die eine bestimmte Anzahl von Elementen hat, ein Mittel zur Erzeugung (3, 12) eines kontinuierlichen Rollens eines graphischen Merkmals in den angezeigten Elementen, wobei das Mittel zur Erzeugung (3, 12) des Rollens durch das Mittel zur Eingabe von Befehlen gesteuert wird,
**dadurch gekennzeichnet, dass** das Mittel zur Erzeugung (3, 12) das graphische Merkmal mit einer Geschwindigkeit rollen lässt, die sich zwischen einer minimalen Geschwindigkeit und einer maximalen Geschwindigkeit entwickelt, wobei die besagte maximale Geschwindigkeit abhängig von der Gesamtanzahl von Elementen der Liste ist.

**11.** Gerät zur Visualisierung (1) nach Anspruch 10, **dadurch gekennzeichnet, dass** das Mittel zur Erzeugung (3, 12) das graphische Merkmal von einer vorgegebenen Geschwindigkeit bis zur maximalen Geschwindigkeit in Abhängigkeit von der Gesamtanzahl von Elementen der Liste rollen lässt, wobei der Geschwindigkeitswechsel linear ist.

**12.** Gerät zur Visualisierung (1) nach Anspruch 10, **dadurch gekennzeichnet, dass** das Mittel zur Erzeugung (3, 12) das graphische Merkmal von einer vorgegebenen Geschwindigkeit bis zur maximalen Geschwindigkeit in Abhängigkeit von der Gesamtanzahl von Elementen der Liste rollen lässt, wobei der Geschwindigkeitswechsel nicht linear ist.

**13.** Gerät zur Visualisierung (1) nach Anspruch 10, **dadurch gekennzeichnet, dass** das Mittel zur Erzeugung (3, 12) das graphische Merkmal mit einer maximalen Geschwindigkeit in Abhängigkeit von der Gesamtanzahl von Elementen der Liste rollen lässt, sobald das Mittel zur Eingabe von Befehlen zum Durchsuchen (7, 8) aktiviert wird.

**14.** Gerät zur Visualisierung (1) nach einem der Ansprüche 10 bis 13, **dadurch gekennzeichnet, dass** es ein Mittel zum Anzeigen (3, 10, 11) eines visuellen Hinweises, der den Wert der Rollgeschwindigkeit darstellt, umfasst.

**15.** Gerät zur Visualisierung (1) nach einem der Ansprüche 10 bis 14, **dadurch gekennzeichnet, dass** es ein Mittel zur Eingabe von Befehlen zum Durchsuchen (7, 8) umfasst, um die Rollgeschwindigkeit bis zur maximalen Geschwindigkeit zu erhöhen, und ein Mittel zur Eingabe von Befehlen zum Durchsuchen (7, 8), um die Rollgeschwindigkeit zu verringern.

## Claims

**1.** Navigation method on elements, the elements being extracted from a list of a determined number of elements, comprising a display step of a part at least of the elements of the list, a continuous scrolling step of a graphical characteristic on the displayed elements, said continuous scrolling step being triggered by the introduction of a navigation command, **characterized in that** the scrolling speed of the graphical characteristic changes between a minimum speed and a maximum speed, said maximum speed being determined according to the total number of elements of the list.

**2.** Navigation method on displayed elements according to claim 1, **characterized in that** as long as the navigation command is activated, the scrolling speed of the graphical characteristic changes in a linear manner from a predetermined value until reaching the maximum scrolling speed depending on the total number of elements of the list.

**3.** Navigation method on displayed elements according to claim 1, **characterized in that** as long as the navigation command is activated, the scrolling speed of the graphical characteristic changes in a non-linear manner from a predetermined value until reaching the maximum scrolling speed depending on the total number of elements of the list.

**4.** Navigation method on displayed elements according to any one of claims 1 to 3, **characterized in that** it comprises a display step of a visual indication representing the value of the scrolling speed.

**5.** Navigation method on displayed elements according to claim 4, **characterized in that** the value of the scrolling speed is indicated by a bar of elements, the number of elements marked giving an indication of the scrolling speed, all the elements being marked when the scrolling speed is maximum.

**6.** Navigation method on displayed elements according to claim 1, **characterized in that** the scrolling speed of the graphical characteristic immediately reaches the maximum speed depending on the total number of elements of the list as soon as the navigation command is enabled.

**7.** Navigation method on displayed elements according to any one of the aforementioned claims, **characterized in that** it comprises an increase step of the scrolling speed up to the maximum speed, and a decrease step of the speed, each of these steps being enabled by the introduction of a command.

**8.** Navigation method on displayed elements according to claim 7, **characterized in that** each of the two speed control steps is enabled by the introduction of a command on an introduction means, the duration of pressing on the said means differentiating the activation of one or other of the steps.

**9.** Navigation method on displayed elements according to any one of the aforementioned claims, **characterized in that** it comprises a first introduction step of a first command triggering the continuous scrolling step at the maximum speed as a function of the total number of elements of the list, and a second introduction step of a second command triggering a reduction of the continuous scrolling speed.

**10.** Display device (1) comprising a means to introduce navigation commands (7, 8), a display means (3, 10, 11) of part at least of the elements of a list having a determined number of elements, a generation means (3, 12) of a continuous scrolling of a graphical characteristic on the displayed elements, the generation means (3, 12) of the scrolling being controlled by the command introduction means, **characterized in that** the generation means (3, 12) scrolls the graphical characteristic at a maximum speed that changes between a minimum speed and a maximum speed, said maximum speed being dependent on the total number of elements of the list.

**11.** Display device (1) according to claim 10, **characterized in that** the generation means (3, 12) scrolls the graphical characteristic at a predetermined speed up to the maximum speed according to the total number of elements of the list, the variation of speed being linear.

**12.** Display device (1) according to claim 10, **characterized in that** the generation means (3, 12) scrolls the graphical characteristic at a predetermined speed up to the maximum speed according to the total number of elements of the list, the variation of speed being non-linear.

**13.** Display device (1) according to claim 10, **characterized in that** the generation means (3, 12) scrolls the graphical characteristic at the maximum speed according to the total number of elements of the list, as soon as the navigation command introduction means (7, 8) is enabled.

**14.** Display device (1) according to any one of claims 10 to 13, **characterized in that** it comprises a display means (3, 10, 11) of a visual indication representing the value of the scrolling speed.

**15.** Display device (1) according to any one of claims 10 to 14, **characterized in that** it comprises a navigation command introduction means (7, 8) to increase the scrolling speed up to the maximum speed, and a navigation command introduction means (7, 8) to decrease the scrolling speed.

Fig. 1

| 2.A | Touche | 2.B | Touche | 2.C |
|:---:|:---:|:---:|:---:|:---:|
| Elément 1 | | Elément 1 | | Elément 1 |
| Elément 2 | | Elément 2 | | Elément 2 |
| Elément 3 | | Elément 3 | | Elément 3 |
| Elément 4 | | Elément 4 | | Elément 4 |
| Elément 5 | | Elément 5 | | Elément 5 |
| Elément 6 | | Elément 6 | | Elément 6 |
| Elément 7 | | Elément 7 | | Elément 7 |
| Elément 8 | | Elément 8 | | Elément 8 |

Fig. 2

EP 1 929 778 B1

| E1 | E2 | E3 | E4 | E5 | E6 | E7 | E8 | E9 | E10 | E11 |
|---|---|---|---|---|---|---|---|---|---|---|

Vitesse de défilement
en nombre d'éléments
par seconde

V2

V1

**Fig. 3**

Temps

Nombre d'éléments : 50

Vitesse de défilement

**Fig. 4.a**

Nombre d'éléments : 1000

Vitesse de défilement

**Fig. 4.b**

Vitesse de défilement

**Fig. 5**

## RÉFÉRENCES CITÉES DANS LA DESCRIPTION

### Documents brevets cités dans la description

- US 6337694 B
- US 20030076301 A